# EUROPEAN PATENT SPECIFICATION

(11) **EP 1 243 624 B1**
(45) Date of publication and mention of the grant of the patent: **26.07.2006**
(21) Application number: 02006481.2
(22) Date of filing: 22.03.2002
(51) Int. Cl.: C09D 11/00, C09D 11/10

(54) **Composition containing stimuli-responsive polymer and image-forming method and apparatus using the ink composition**
Zusammensetzung enthaltend ein stimulierbares Polymer and Bildgebungsverfahren und Apparatur welches diese Farbe benutzt
Composition contenant un polymer sensible à stimuli et procédé d'imagerie et appareil d'enregistrement l'utilisant

(30) Priority: 23.03.2001 JP 2001086239; 10.07.2001 JP 2001209923; 18.03.2002 JP 2002074975
(43) Date of publication of application: 25.09.2002
(73) Proprietor: CANON KABUSHIKI KAISHA, Ohta-ku, Tokyo (JP)
(72) Inventor: Nakazawa, Ikuo, c/o Canon Kabushiki Kaisha, Tokyo (JP); Sato, Koichi, c/o Canon Kabushiki Kaisha, Tokyo (JP); Suda, Sakae, c/o Canon Kabushiki Kaisha, Tokyo (JP); Ikegami, Masayuki, c/o Canon Kabushiki Kaisha, Tokyo (JP)
(74) Representative: Weser, Wolfgang

(56) References cited:
- EP-A- 0 776 951
- EP-A- 1 072 956
- EP-A- 1 184 427
- US-A- 5 145 518
- US-A- 5 633 109

## Description

The present invention relates to an ink composition having a stimulation-responsiveness to change its property under stimulation, comprising a block polymer having polyvinyl ether structure, a solvent, a pigment or dye. Further, the present invention relates to an image-forming method and an image-forming apparatus using said ink composition.

Ink compositions are known which are formulated as colorants as solid particles and toner. The recent development in digital printing technology is remarkable. Typical examples of digital printing technology are a technology of electrophotography and inkjet recording, and recently, their status in office-use and household-use image-forming techniques is much increasing.

In particular, the technology of inkjet recording has characteristics which are a compact and power-saving, as a direct recording method. Also, in the inkjet recording technology, the image quality is being greatly enhanced by reduction of the size of the nozzle orifices. One example of such an inkjet recording technology includes a method in which ink supplied from an ink tank to a nozzle is heated by heater on the nozzle to be vaporized and bubbled, and ink is thus ejected from the nozzle to form an image on a recording medium. Another example includes a method in which ink is ejected from a nozzle by vibrating a piezoelectric device. In these methods, an aqueous solution of dye is usually used. In this case, when a plurality of inks are applied, they may blur, and a phenomenon called feathering may occur along the direction of the fibers that constitute the paper at a recording point of a recording medium. The document US-A-5 085 698 discloses the use of pigmented inks in order to overcome said phenomenon. However, further improvements in many points are still desired.

The document EP-A2-1 1 84 427, which has been published on March 06, 2002 is related to an ink for ink-jet recording and an ink cartridge and an recording apparatus using said ink. The ink contains an oil soluble dye, a humectant, a penetrant, water, and an amphilic star block polymer of which the outer portion is hydrophilic. An embodiment of said amphiphilic star block polymer comprises a block polymer having the vinyl ether structure and containing one type of hydrophilic block having the ethyl alcohol side chain, and further containing one type of hydrophobic block having the iso-butyl side chain.

The document US-A-5 145 518 is related to inks containing block copolymer micelles. One embodiment is directed to an ink composition which comprises an aqueous liquid vehicle and particles of an average diameter of 100 nanometers or less which comprise micelles of block copolymers of the formula ABA, wherein A represents the hydrophilic segment and B represents a hydrophobic segment, and wherein dye molecules are covalently attached to the micelles. Examples of suitable monomers for the block A include vinyl ethers of the general formula 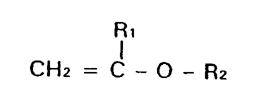 wherein R₁ is selected from the group consisting of hydrogen, methyl, and ethyl, and R2 is selected from hydroxyl-substituted alkylgroups,such as 2-hydroxyethyl, 2-hydroxypropyl, 3-hydroxypropyl, 2-hydroxybutyl, 3-hydroxybutyl, and the like, and amino-substituted alkyl groups, such as 2-aminoethyl, 2-aminopropyl, 3-aminopropyl, 2-aminobutyl, 3-aminobutyl, 4-aminobutyl, and the like. Mixtures of two or more monomers can also be employed in the hydrophilic block. In addition, the two A segments in the ABA block copolymer employed need not be of identical composition, but can each be of different monomers, structure and/or composition. Exemplary embodiments of the segment A comprise ethylene oxide-propylene oxide-ethylene oxide block copolymer.

The document EP-A2-1 072 956 is related to a stable pigment dispersion and a photosensitive recording material prepared therewith. A dispersed pigment is dispersed with a mixture of at least one polymer containing polyvinyl alcohol, polyvinyl ether and/or polyvinyl acetal units and at least one polymer based on acrylate. The weight ratio of the two types of polymer is selected so that gel formation is reliably prevented.

A specific polymer may have the polyvinyl ether structure and corresponding to the following general formulas
or 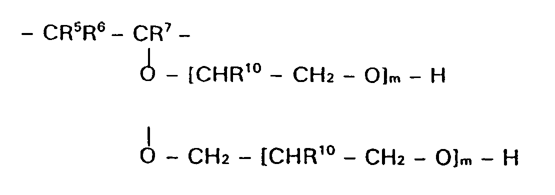 which is a polyvinyl ether structure having oxyalkylene structure side chains.

Starting from an ink composition having a stimulation-responsiveness to change its property under stimulation, comprising a block polymer having polyvinyl ether structure, a solvent, and pigment or dye, is the object of the present invention to provide such a type of ink composition having a good dispersion stability, an improved blurring resistance and a feathering resistance, and an improved fixability.

In order to solve the fore-mentioned obj ect, the present invention provides an ink composition having a stimulation-responsiveness to change its property under stimulation, comprising a block polymer having polyvinyl ether structure, a solvent, and pigment or dye, wherein said block polymer having polyvinyl ether structure comprises to or more different hydrophilic blocks having an oxyalkylene structure in at least a part of the side chains thereof.

Further, the present invention provides an image-forming method wherein the fore-mentioned ink composition is applied on a recording medium.

In addition, the present invention provides an image-forming apparatus for forming an image by applying ink on a recording medium wherein said apparatus contains the fore-mentioned ink composition.

The ink composition according to the present invention charges at least one distinctive property under stimulation; this phenomenon is called "stimulation-responsiveness". This means, the stimulation-responsiveness is a phase change of the ink composition caused by stimulation. For example,
- the stimulation-responsiveness is a response caused by a temperature change, and the temperature change falls in the range that covers the phase transition temperature of the ink composition and therearound, or
- the stimulation-responsiveness may be a response caused by electromagnetic waves, and the wavelength range of the electromagnetic waves falls between 100 and 800 nm, or
- the stimulation-responsiveness may be a response caused by a pH change, and the range of pH change falls between pH 3 and pH 12, or
- the stimulation-responsiveness may be a response caused by concentration change, and the concentration change falls in the range that covers the phase transition concentration of the composition and therearound. Further, two or more kinds of such stimulation may be combined. Based on the stimulation-responsiveness of the ink composition, the dispersion stability of the pigment or dye may be improved. Even when a temperature is lowered due to a change of the external environmental, the dispersibility of the pigment or dye may be kept stable, since precipitation and deposition does not occur due to an increased hydrophilicity of the polymer in the ink composition which is caused by stimulation-responsiveness to said temperatur change.

Preferably the block polymer having polyvinyl ether structure and comprising at least two different hydrophilic blocks, has a repeating unit of the structure -(CH₂-CH(OR¹)) in which R¹ is specifically defined herein. Also preferably, the solvent in the ink composition is water or an aqueous solvent. Also preferably, the ink composition may contains an additional polymer other than the polymer having the polyvinyl ether structure. Also preferably, the ink composition may further contain a surfactant. Preferably, the ink composition of the present invention is an ink for inkjet recording.

In the image-forming method of the present invention, the stimuli-responsive ink composition may be contacted with a stimulating substance or composition thereby fixing the ink composition on the recording medium to form an image thereon.

In one preferred embodiment of the image-forming method of this aspect, the stimuli-responsive ink composition may be contacted with a composition that contains an additive capable of crosslinking with the block polymer (hereinafter this composition will be referred to as a crosslinking agent). This composition provides a stimulation to the ink composition, causing a fixation of the ink composition on the recording medium to form an image thereon.

Preferably, the block polymer in the ink composition is amphiphilic, and water is preferably used as the solvent. In this case, the block polymer forms micelles well dispersing the pigment. Since most part of the block polymer does not dissolve in molecular state but does disperse in micellular state, whereby the ink composition of the present invention slows relatively low viscosity. When this ink composition is contacted with the composition containing the crosslinking agent capable of reacting with a part of the block polymer or capable of forming a complex with a part of the block polymer, the micelles of the block polymer form a network structure which increases the viscosity of the ink. Thus, the preferred embodiment of the image-forming method of the present invention realizes good image formation having a sufficient fixability. If the concentration of the crosslinking agent is increased or if a polyfunctional crosslinking agent is used, the state of the ink composition of the present invention may be changed to a gel.

In said respect, the preferred crosslinking agent is a compound having a carboxyl group as a functional group. Even more preferred, this compound serving as a crosslinking agent, may contain two or more carboxyl groups; more specifically, this compound may be selected from a group including dicarboxylic acids, tricarboxylic acids and polycarboxylic acids.

Preferably, the polymer contained in the ink composition of the present invention, comprises a structure wherein at least a part of said structure changes from hydrophobic to hydrophilic at 20°C or lower, and more preferred at 10°C or lower.

In the present invention, the stimulating substance or composition may be provided on a recording medium and the image-forming method may be performed as an inkjet recording method the ink composition is ejected onto a recording medium by applying thermal energy thereto.

The image-forming apparatus of the present invention may comprise means for contacting the stimuli-responsive ink composition with a stimulating substance or composition, thereby fixing the ink composition on a recording medium to form an image thereon. This stimulating substance or composition may be provided within the ink composition, or alternatively, this stimulating substance or composition may previously be provided on a recording medium. The image-forming apparatus of the present invention may comprise means for applying thermal energy to the ink thereby ejecting the ink onto the recording medium. In one preferred embodiment, the image-forming apparatus of the present invention has a means for contacting the stimuli-responsive ink composition with a stimulating composition or a composition that contains an additive (crosslinking agent) capable of crosslinking with the block polymer. This kind of contacting, causes a fixation of the ink composition on the recording medium to form an image thereon.

The preferred ink composition to be used in the image-forming apparatus of the present invention, contains a polymer in which at least a part of the polymer structure changes from hydrophobic to hydrophilic at 25°C or lower, and even more preferred at 20°C or lower.

Accordingly, the present invention provides an ink composition having good dispersion stability at a temperature of 20°C or lower, preferably at 10°C or lower. This ink composition contains a polymer wherein at least a part of the polymer structure changes from a state compatible with a solvent to a state not compatible with said solvent at a temperature of 20°C or lower, and preferably at 10°C or lower.

The above and other objects, effects, features and advantages of the present invention will become more apparent from the following description of embodiments thereof taken in conjunction with the accompanying drawings.

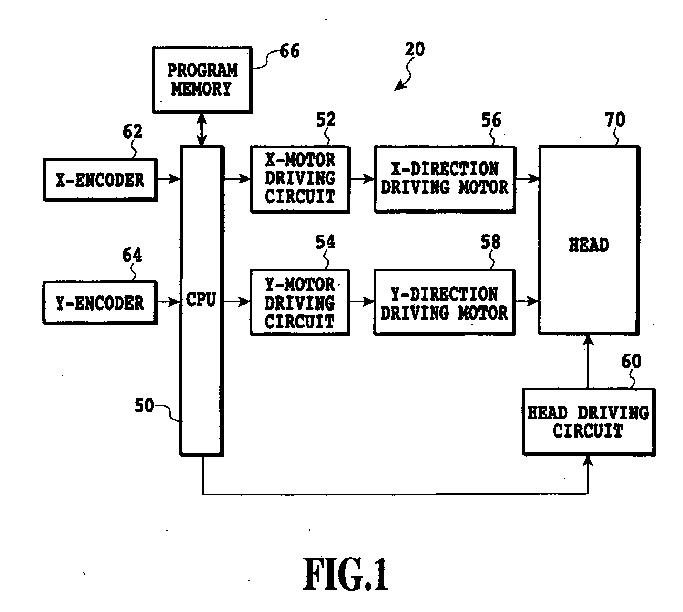

Fig. 1 illustrates a block diagram of an inkjet recording apparatus.

The ink composition of the present invention contains a solvent enabling the components contained in the composition to be dissolved, suspended or dispersed therein; any medium may be used having said property. For example, the solvent may be selected from a group including organic solvents such as various, linear, branched or cyclic aliphatic hydrocarbons, aromatic hydrocarbons, heteroaromatic hydrocarbons and the like; further including aqueous solvents and water. Especially preferred are water and aqueous solvents. Examples for the aqueous solvents are polyalcohols such as ethylene glycol, diethylene glycol, triethylene glycol, polyethylene glycol, propylene glycol, polypropylene glycol, glycerin and the like; polyalcohol ethers such as ethylene glycol monomethyl ether, ethylene glycol monoethyl ether, ethylene glycol monobutyl ether, diethylene glycol monoethyl ether, diethylene glycol monobutyl ether and the like; and nitrogen-containing solvents such as N-methyl-2-pyrrolidone, substituted pyrrolidones, triethanolamine and the like. When used as solvent in ink compositions, monohydric alcohols such as methanol, ethanol and isopropyl alcohol will increase the drying speed of the ink composition on paper.

Due to its stimulation-responsiveness to change its property under stimulation, the composition of the present invention changes its condition (properties). For example, this condition change includes a phase change from sol state to gel state, a phase change from liquid state to solid state, and a change of the chemical structure. The stimulation includes, for example, temperature change, application of electric field, exposure to light (electromagnetic waves) such as UV radiation, visible light or infrared radiation, pH change of the composition, addition of chemical substance, and concentration change of the composition. The stimulation-responsiveness referred to herein means that the composition of the present invention responds to the stimulation as above and changes its properties. Specifically, the stimulation-responsiveness means that, when the composition is exposed to stimulation such as exposure to electromagnetic waves, application of electric field, temperature change, pH change, addition of chemical substance or concentration change, the morphology and the physical properties of the composition is/are significantly changed in response to the stimulation (environmental changes). In the present invention, the function of stimulation-responsiveness is achieved by the specific polymer as mentioned below.

The block polymer, contained in the ink composition of the present invention can almost completely retain the properties of the repeating units forming said blocks, and the properties are exhibited while each property of different blocks or units are coexisting. In a block polymer, the stimuli-responsive blocks or units function move effectively, and the complete block polymer exhibits its function more efficiently compared with a random polymer. The block polymer for use in the present invention is a block polymer having a polyvinyl ether structure, which will be described in below.

The block polymer for use in the present invention has at least two different hydrophilic blocks. The term "different" referred to herein means that the blocks have different chemical structures, that is, they differ in the monomer structure, in the branch structure of the polymer chain, or the like; and the term does not mean the difference in only the molecular chain length of the individual repeating units in the polymer chain. At least one hydrophilic block of those different two or more blocks of the polymer responds to a stimulation, i.e. for example, the property of the block is changed from hydrophilic to hydrophobic, and the property of the composition is thereby altered. On the contrary, when a block responds to a stimulation, a hydrophobic property in a certain condition will be changed to hydrophilic property, and the property of the composition is thereby altered. One preferred example of the stimulation-responsiveness of such block polymers includes the response that, when the polymer contained in the composition of the present invention is a block polymer having plural blocks, at least two of the plural blocks are hydrophilic blocks (in the present invention, the hydrophilic blocks mean that they are still hydrophilic even after exposed to stimulation, or become hydrophilic after the exposed to stimulation), and at least one of them is responsive to stimulation and at least one of the others is all the time hydrophilic under used conditions. In the case where the stimuli-responsive blocks are hydrophobic under a certain condition, and the composition is in micelles having a low viscosity, if the stimulation is applied to the composition, the stimuli-responsive blocks are changed to hydrophilic by the stimulation to allow the composition to change from a dispersed solution having a low viscosity to a polymer solution having a high viscosity due to association of the polymer. In that manner, the composition of the present invention changes its properties by a certain stimuli.

Another example of the composition of the present invention is an aqueous composition, in which the polymer is a block polymer as in the above and the stimuli-responsive blocks of the block polymer are hydrophilic in a certain condition. In such aqueous composition, when the composition is stimulated under the condition in which the polymer is dissolved in aqueous solution, the stimuli-responsive polymer blocks change to hydrophobic, whereby the composition is gelled while remaining micelle state to drastically increase its viscosity.

In still another example of the composition, the present invention includes a composition using a block polymer that consists of three different types of blocks, a hydrophobic block A, a stimuli-responsive block B and a hydrophilic block C. This example is the case where the composition is in micelle dispersion of AB cores under the water-dispersed condition under which the stimuli-responsive block B is hydrophobic, and when the composition is exposed to stimuli, block B is changed to hydrophilic to form micelles that the core is block A, whereby the composition is gelled owing to the change of interaction between the micelles to drastically increase its viscosity.

As mentioned above, when the composition contains a block polymer having at least two different hydrophilic blocks, an extremely good stimulation-responsiveness can be realized by using water as a solvent.

From the viewpoint of the molecular design as mentioned above, the block configuration of the block polymer to be used in the present invention is preferably AB, ABA, ABC, ABCD (D is a block, the structure of which differs from those of A, B and C, and it may be hydrophilic or hydrophobic), or ABCA.

As mentioned above, a preferred embodiment of the ink composition of the present invention is a stimuli-responsive, aqueous dispersion that contains a block polymer having a polyvinyl ether structure, water, and a solid particle forming a pigment or dye. Using this aqueous dispersion a dispersion stability of the solid pigment is enhanced, whereby the resistance against blurring and feathering is improved, and a pigment dispersion ink material is obtained having a sufficient fixability.

Accordingly, the aqueous dispersion of the present invention can be used for an image-forming material which can realize high-quality, energy-saving, high-speed image formation. Accordingly, this aqueous dispersion of the present invention exhibits a good image fixation and may be favorably used as ink for inkjet printers.

The block polymer having the polyvinyl ether structure imparts a stimuli-responsive to the dispersion, and also has a function of enhancing the dispersion stability of pigment or dye. Therefore, it is preferable that the polyvinyl ether has a structure comprising both hydrophilic segments and hydrophobic segments, which means a so called amphiphilic structure. Specifically, one preferred example of the polymer is a copolymer comprising a hydrophilic monomer and a hydrophobic monomer. The polymer having the polyvinyl ether structure of this type provides a more preferred dispersibility, since the polyvinyl ether structure generally has a low glass transition point and has flexible property, thereby having compatible points where the hydrophobic segments are physically entangled with solid particles and are easy to be compatible with them.

Many reports are available concerning the synthesis of polymer having polyvinyl ether structures (for example, JP-A 080221/1999). The typical method is the cation living polymerization described by Aoshima et al. (JP-A 322942/1999, JP-A 322866/1999). The synthetic method of the polymer using cation living polymerization process provides various polymers such as homopolymers and copolymers comprising two or more different components, as well as block polymers, graft polymers and graduation polymers, with a uniform length (molecular weight) accurately. Polyvinyl ethers may have various functional groups introduced into the side chains thereof. Cation polymerization method may also be effected in HI/I₂ or HCl/SnCl₄ system or the like.

The primary aim of the polymer having polyvinyl ether structure used in the present invention is to impart the stimuli-responsive to the composition.

But in addition, the polymer may impart any other functions (for example, a function of enhancing the dispersibility of solid particles such as pigment).

In the following, typical kinds of stimulation are described which cause a change of at least one property of the aqueous dispersion.

The response to a stimulation of a temperature change includes a change of solubility, thermal polymerization, polarity, or phase transition (sol-gel transition, liquid crystallization) or the like of the aqueous dispersion. Preferably, said temperature change falls within range of the phase transition temperature and even more preferred falls in the range including the critical gelling temperature of the aqueous dispersion. Here the polyvinyl ether structure responsive to the stimulation of temperature change includes, for example, alkoxyvinyl ether derivatives such as poly(2-methoxyethyl vinyl ether) and poly(2-ethoxyethyl vinyl ether), or copolymers which contains such polymer compounds as main ingredient. Especially, block polymers of poly((2-methoxyethyl vinyl ether)-b-(2-ethoxyethyl vinyl ether)) undergo rapid viscosity change at 20°C. "b" in poly((2-methoxyethyl vinyl ether)-b-(2-ethoxyethyl vinyl ether)) means an abbreviation to indicate a block polymer, structure.

Another stimulation-responsiveness is the exposure to electromagnetic waves. Preferably, the wavelengths of the electromagnetic waves all within a range of from 100 to 800 nm. This stimulation response causes a change of the solubility, photopolymerization, photochromism, optical isomerization, optical dimerization, or phase transition (sol-gel transition, liquid crystallization) of the aqueous dispersion. The here responsive polyvinyl ether structure includes, for example, vinyl ether derivatives having a polymeric functional group such as poly(2-hydroxyethyl methacrylate), or copolymers which contains such polymer compounds as main ingredient.

Regarding the response to the stimulation of a pH change, the aqueous dispersion is preferably responsive to a pH change in the range of from pH 3 to pH 12. This stimulation response causes, for example, a change of solubility, hydrogen bond and coordinate bond, change of polarity, or phase transition (sol-gel transition, liquid crystallization) of the aqueous dispersion. Examples of the here responsive polyvinyl ether structure include copolymers or polymer blends of alkoxyvinyl ether derivatives such as poly(2-methoxyethyl vinyl ether), poly(2-ethoxyethyl vinyl ether) and the like, and polycarboxylic acids such as polymethacrylic acid and the like.

Still another example includes the stimulation of a change of the concentration of the dispersion. Here the concentration of the aqueous dispersion may be changed by evaporation or absorption of water in the aqueous dispersion, or by the change of the concentration of the polymer dissolved in the aqueous dispersion. Preferably, this change of concentration falls within a range including the phase transition-causing concentration and even more preferred, includes the range of critical gelling concentration. Here, this response causes for example, a change in the relations of the hydrogen bonds, of the hydrophobic interaction or phase transition (sol-gel transition, liquid crystallization). Examples of suited polymers include aloxyvinyl ether derivatives such as poly(2-methoxyethyl vinyl ether) and poly(2-ethoxyethyl vinyl ether) and the like, aryloxyvinyl ether derivatives such as poly(2-phenoxyethyl vinyl ether) and the like, or copolymers which contains such polymer compounds as main ingredient.

In the aqueous dispersion of the present invention two or more kinds of said type of stimulation may be combined.

The block polymer having the polyvinyl ether structure and causing the stimulation-responsiveness of the aqueous dispersion, may comprise a homopolymer but is preferably a copolymer comprising two or more components of vinyl ether for optimizing the properties of the polymer in order to provide the best performance of the stimulation-responsiveness of each monomer component forming this block polymer.

The function of the stimulation-responsiveness is achieved by the block polymer having the polyvinyl ether structure. However, the ink composition according to the present invention, may contain any other additional polymer used together in order to cause or further enhance the function, of the stimulation-responsiveness. This other polymer may provide a different function (for example, a function of enhance dispersion stability) to the polymer having the polyvinyl ether structure.

Other examples of the stimuli-responsive polymers are described below, however the present invention is not limited thereto.

The first example is a polymer which causes a change of the dispersion state of the composition and thus occuring a phase transition when heating the composition. The polymer of this type includes, for example, poly-N-alkyl-substituted (meth)acrylamides such as poly(meth)acrylamide, poly-N-isopropyl(meth)acrylamide; poly-N-vinylisobutylamide, poly(meth)acrylic acid and its metal salts; poly-2-hydroxyethyl (meth)acrylate, poly-N-(meth)acrylpiperidine, poly(2-ethyloxazoline), polyvinyl alcohol and its partially saponified derivatives, polyethylene oxide, polyethylene oxide-polypropylene oxide copolymer, poly(ethylene glycol monomethacrylate), poly(ethylene glycol monoacrylate); substituted cellulose derivatives such as methyl cellulose, ethyl cellulose, hydroxyethyl cellulose, hydroxypropyl cellulose; and copolymers and polymer blends in which these polymer compounds represent a main component.

The second example includes a polymer causing a change of the polymer structure through photoreaction by exposure to electromagnetic waves, thus changing the dispersion state of the aqueous dispersion and occurring a phase transition. This type of the polymer includes a polymer compound having a photochromic group. Here many compounds, may be mentioned and specifically, for example, (meth)acrylamides, poly-N-alkyl-substituted (meth)acrylamides such as poly-N-isopropyl(meth)acrylamide, and N-vinylisobutylamides, which have a group such as triphenylmethane derivatives being ionically cleavable by irradiation of light, spiropyran derivatives or spiroxazine derivatives, or the like.

The third example is a polymer causing a change of the pH state of the aqueous dispersion and thus inducing a phase transition. Specific examples of this polymer include, for example, poly(meth)acrylic acid and its metal salts, polyvinylsulfonic acid, polyvinylbenzenesulfonic acid, poly(meth)acrylamidoalkylsulfonic acids, polymaleic acid and its metal salts, or copolymers containing monomer

components that are elements of these polymer compounds, as main component; polyvinyl alcohol-polyacrylic acid composite and its metal salts, poly(ethylene glycol monomethacrylate), metal salts of carboxymethyl cellulose, metal salts of carboxyethyl cellulose, and copolymers and polymer blends which contain these polymer compounds as main component.

The fourth example is a polymer causing a change of the concentration of the polymer dissolved in the aqueous dispersion and thus inducing a phase transition. The polymers of this type include, for example, an aqueous solution of a polymer compound such as poly(meth)acrylamide, poly-N-alkyl-substituted (meth)acrylamides, polyvinyl methyl ether or polymethacrylic acid having lowest critical solubility temperature (LCST) (JP-B 7948/1986, JP-A 237426/1991, JP-A 82809/1996), as well as polyvinyl alcohol, polyvinyl alcohol-polyacrylic acid composite and its metal salts, poly(ethylene glycol monomethacrylate), inorganic polymers such as alkoxysiloxanes, and copolymers and polymer blends which contain these polymer compounds as main component.

A polymer other than the polymer having the polyvinyl ether structure (for example, the stimuli-responsive polymer mentioned above) is added to the stimuli-responsive aqueous dispersion that contains a polymer having polyvinyl ether structure, water and a solid particle, thereby being able to give or enhance the stimulation-responsiveness.

Though not specifically being limited, the molecular structure of the repeating units of the block polymer having the polyvinyl ether structure is preferably represented by the following general formula (1):

-(CH₂-CH(OR¹))- (1)

wherein R¹ is selected from a linear, branched or cyclic alkyl group having from 1 to 18 carbon atoms, a phenyl (Ph) group, a pyridyl (Pyr) group, or a group of Ph-Ph, Ph-Pyr, -(CH(R²)-CH(R³)-O)₁-R⁴ and -(CH₂)ₘ-(O)ₙ-R⁴ ; the hydrogen atom on the aromatic ring may be substituted with a linear or branched alkyl group having from 1 to 4 carbon atoms; and the carbon atom in the aromatic ring may be substituted with a nitrogen atom. 1 is an integer 1 to 18; m is an integer 1 to 36; and n is 0 or 1. R² and R³ each independently represent H or CH₃. R⁴ represents H, a linear, branched or cyclic alkyl group having from 1 to 18 carbon atoms, Ph, Pyr, Ph-Ph, Ph-Pyr, -CHO, -CH₂CHO, -CO-CH=CH₂, -CO-C(CH₃)=CH₂, or CH₂COOR⁵, and when R⁴ is a substituent other than hydrogen, the hydrogen atom on the carbon atom of the substituent may be substituted with a linear or branched alkyl group having from 1 to 4 or with F, Cl or Br, and the carbon atom in the aromatic ring of the substituent may be substituted with a nitrogen atom. R⁵ represents H, or an alkyl group having from 1 to 5 carbon atoms.

Preferably, R¹ is selected from a linear, branched or cyclic alkyl group having from 1 to 18 carbon atoms, -(CH(R²)-CH(R³)-O)₁-R⁴ or -(CH₂)ₘ-(O)ₙ-R⁴ ; l and m each independently is 1 to 12; n is 0 or 1; R² and R³ are each independently H or CH₃; R⁴ is H, a linear, branched or cyclic alkyl group having from 1 to 6 carbon atoms, Ph, Pyr, Ph-Ph, Ph-Pyr, -CHO, -CH₂CHO, -CO-CH=CH₂, -CO-C(CH₃)=CH₂, or CH₂COOR⁵; when R⁴ is a substituent other than hydrogen, the hydrogen atom on the carbon atom of the substituent may be substituted with a linear or branched alkyl group having from 1 to 4 or with F, Cl or Br, and the carbon atom in the aromatic ring of the substituent may be substituted with a nitrogen atom; R⁵ is H, or an alkyl group having from 1 to 5 carbon atoms.

he linear or branched alkyl group includes, for example, methyl, ethyl, n-propyl, i-propyl, n-butyl, sec-butyl, tert-butyl, pentyl, n-hexyl, heptyl, octyl, nonyl, decyl, undecyl, dodecyl and octadecyl groups. The cyclic alkyl group includes, for example, cyclopropyl, cyclobutyl, cyclopentyl, cyclohexyl and cyclooctyl groups. When hydrogen atom on the carbon atom is substituted, substitution may occur at one or more positions.

Also preferably, the molecular structure of the repeating units of the polymer having the polyvinyl ether structure is represented by the following general formula (2):

-(CH₂-CH(OR⁶))- (2)

wherein R⁶ is selected from a linear, branched or cyclic alkyl group having from 1 to 18 carbon atoms, Ph, Pyr, Ph-Ph, Ph-Pyr, -(CH₂-CH₂-O)₁-R⁷ or (CH₂)ₘ-(O)ₙ-R⁷ ; the hydrogen atom on the aromatic ring may be substituted with a linear or branched alkyl group having from 1 to 4 carbon atoms; and the carbon atom in the aromatic ring may be substituted with a nitrogen atom. 1 is an integer 1 to 18; m is an integer 1 to 36; and n is 0 or 1. R⁷ represents H, a linear, branched or cyclic alkyl group having from 1 to 18 carbon atoms, Ph, Pyr, Ph-Ph, Ph-Pyr, -CHO, -CH₂CHO, -CO-CH=CH₂, -CO-C(CH₃)=CH₂, or CH₂COOR⁸, and when R⁷ is a substituent other than hydrogen, the hydrogen atom on the carbon atom of the substituent may be substituted with a linear or branched alkyl group having from 1 to 4 or with F, Cl or Br, and the carbon atom in the aromatic ring of the substituent may be substituted with a nitrogen atom. R⁸ represents H, or an alkyl group having from 1 to 5 carbon atoms.

Preferably, R⁶ is selected from a linear, branched or cyclic alkyl group having from 1 to 18 carbon atoms, Ph, Pyr, Ph-Ph, Ph-Pyr, -(CH₂-CH₂-O)₁-R⁷ or -(CH₂)ₘ-(O)ₙ₋R⁷; the hydrogen atom on the aromatic ring may be substituted with a linear or branched alkyl group having from 1 to 4 carbon atoms, and the carbon atom in the aromatic ring may be substituted with a nitrogen atom; 1 is 1 to 18; m is 1 to 36; n is 0 or 1; R⁷ is H, a linear, branched or cyclic alkyl group having from 1 to 18 carbon atoms, Ph, Pyr, Ph-Ph, Ph-Pyr, -CHO, -CO-CH=CH₂ or -CO-C(CH₃)=CH₂; when R⁷ is a substituent other than hydrogen, the hydrogen atom on the carbon atom of the substituent may be substituted with a linear or branched alkyl group having from 1 to 4 or with F, Cl or Br, and the carbon atom in the aromatic ring of the substituent may be substituted with a nitrogen atom.

Preferred examples of the molecular structure of the repeating units of the block polymer having the polyvinyl ether structure are mentioned below. However, The polyvinyl ether structures of present invention are not limited thereto.

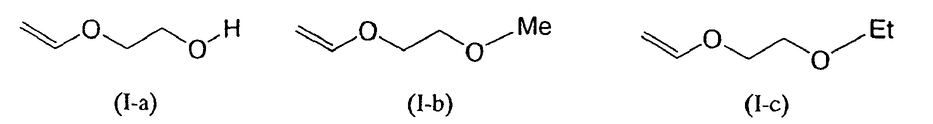

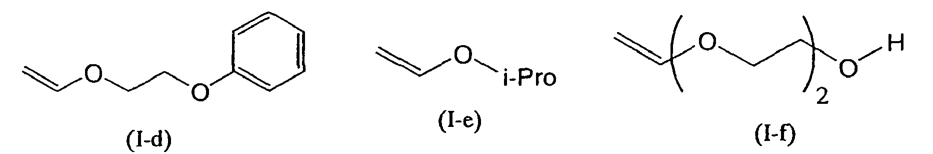

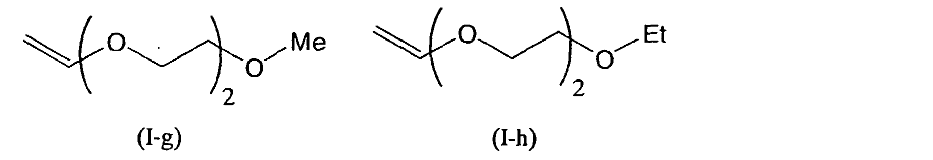

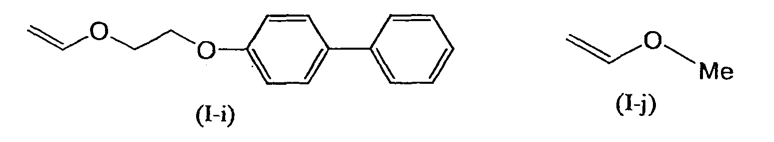

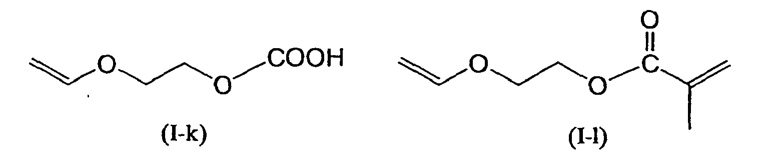

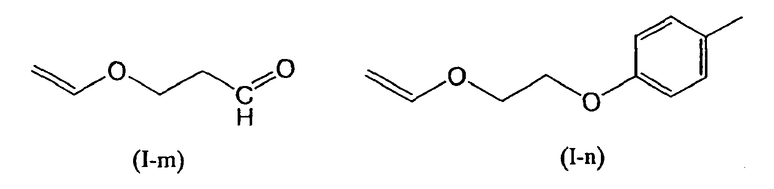

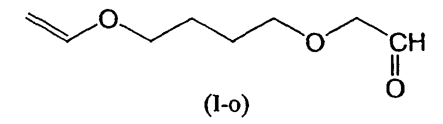

Stimulation responding, polymers having polyvinyl ether structures composed of any of the vinyl ether monomers mentioned above are preferably used in the present invention. However, the polymer used in the present invention is not limited to the stimulation responding, polymer having polyvinyl ether structures composed of any of the above-mentioned vinyl ether monomers. In the following, some examples of the block polymer are described having the polyvinyl ether structure and having been obtained from two or more monomer components. However, the block polymer used in the present invention is not limited thereto.

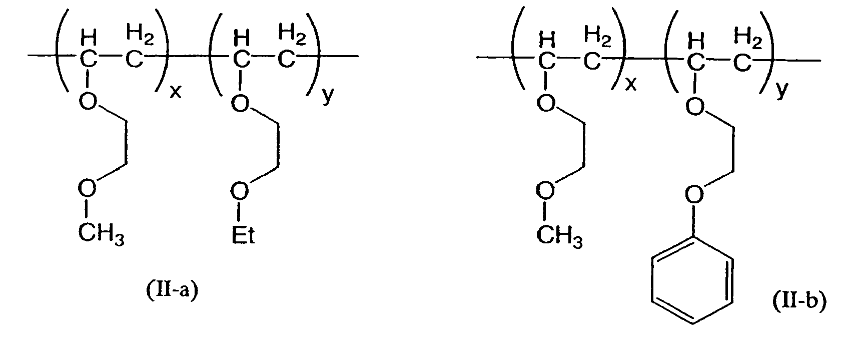

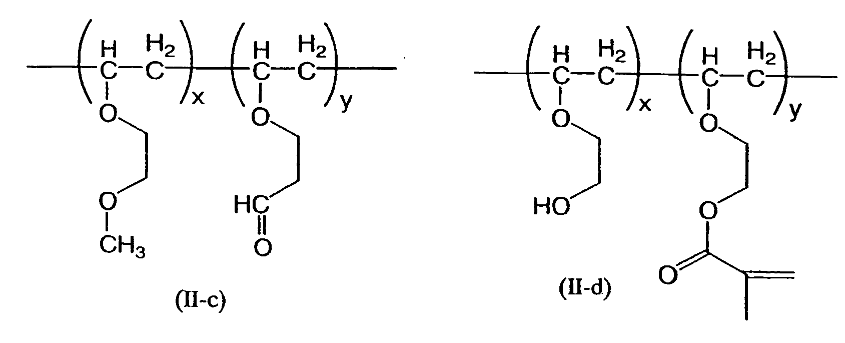

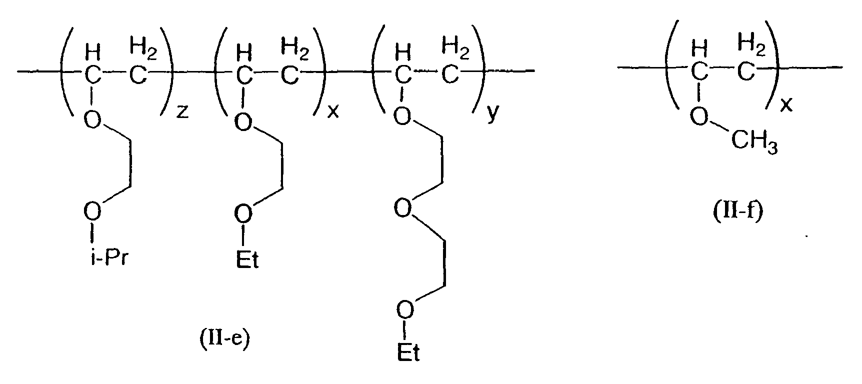

Preferably, the number of the independent repeating units of the different polyvinyl ethers [indicated by x, y and z in above formulae (II-a) to (II-f)] 1 to 10,000 ; even more preferred, the sum of the repeating units [indicated by (x + y + z) in the above formulae (II-a) to (II-f)] is a value in the range of from 10 to 40,000.

The polymer as used in the present invention has an oxyalkylene structure in at least a part of the side chains, thereof.

Next, the other components of the aqueous dispersion of the present invention, are described.

### Water

Water in the aqueous dispersion of the present invention is preferably ion-exchanged water not containing metal ions, pure water, or ultra-pure water.

### Aqueous Solvent

As the aqueous solvent, may be mentioned for example, polyalcohols such as ethylene glycol, diethylene glycol, triethylene glycol, polyethylene glycol, propylene glycol, polypropylene glycol, glycerin; further polyalcohol ethers such as ethylene glycol monomethyl ether, ethylene glycol monoethyl ether, ethylene glycol monobutyl ether, diethylene glycol monoethyl ether, diethylene glycol monobutyl ether; and further, nitrogen-containing solvents such as N-methyl-2-pyrrolidone, substituted pyrrolidones, triethanolamine. For accelerating the drying speed of the aqueous dispersion on recording media, usable are Monohydric alcohols such as methanol, ethanol, isopropyl alcohol, are preferably used in order to increase the drying speed of the aqueous solution on a recording medium.

The content of water of the aqueous solvent amounts preferably 20 to 95 % by weight, even more preferred 30 to 90 % by weight each based on the total weight of the aqueous dispersion, forming the ink composition according to the present invention.

### Solid particle

The solid particle in the aqueous dispersion is be selected from pigments and dyes. The content of said pigment or dye amounts preferably 0.1 to 50 by weight based on the total weight of the aqueous dispersion, forming the ink composition according to the present invention.

Specific examples of pigment and dye, which are employed in the ink composition according to the present invention are described below.

Any organic pigments and inorganic pigments may be used, and pigments used in ink are preferably black pigments and pigments of three primary colors of cyan, magenta and yellow. Color pigments other than mentioned above, colorless or pale-color pigments, and pigments having a metallic luster may also be used. Pigments newly prepared for the present invention may be also usable. Examples of commercially-available black, cyan, magenta and yellow pigments are mentioned below.

Black pigments are, not limited to, Raven 1060, Raven 1080, Raven 1170, Raven 1200, Raven 1250, Raven 1255, Raven 1500, Raven 2000, Raven 3500, Raven 5250, Raven 5750, Raven 7000, Raven 5000 ULTRAII, Raven 1190 ULTRAII (all by Columbia Carbon); Black Pearls L, MOGUL-L, Regal 400R, Regal 660R, Regal 330R, Monarch 800, Monarch 880, Monarch 900, Monarch 1000, Monarch 1300, Monarch 1400 (all by Cabot); Color Black FW1, Color Black FW2, Color Black FW200, Color Black 18, Color Black S160, Color Black S170, Special Black 4, Special Black 4A, Special Black 6, Printex 35, Printex U, Printex 140U, Printex V, Printex 140V (all by Dexxa); No. 25, No. 33, No. 40, No. 47, No. 52, No. 900, No. 2300, MCF-88, MA600, MA7, MA8, MA100 (all by Mitsubishi Chemical) and the like.

Cyan pigments are, not limited to, C.I. Pigment Blue-1, C.I. Pigment Blue-2, C.I. Pigment Blue-3, C.I. Pigment Blue-15, C.I. Pigment Blue-15:2, C.I. Pigment Blue-15:3, C.I. Pigment Blue-15:4, C.I. Pigment Blue-16, C.I. Pigment Blue-22, C.I. Pigment Blue-60 and the like.

Magenta pigments are, not limited to, C.I. Pigment Red-5, C.I. Pigment Red-7, C.I. Pigment Red-12, C.I. Pigment Red-48, C.I. Pigment Red-48:1, C.I. Pigment Red-57, C.I. Pigment Red-112, C.I. Pigment Red-122, C.I. Pigment Red-123, C.I. Pigment Red-146, C.I. Pigment Red-168, C.I. Pigment Red-184, C.I. Pigment Red-202, C.I. Pigment Red-207 and the like.

Yellow pigments are, not limited to, C.I. Pigment Yellow-12, C.I. Pigment Yellow-13, C.I. Pigment Yellow-14, C.I. Pigment Yellow-16, C.I. Pigment Yellow-17, C.I. Pigment Yellow-74, C.I. Pigment Yellow-83, C.I. Pigment Yellow-93, C.I. Pigment Yellow-95, C.I. Pigment Yellow-97, C.I. Pigment Yellow-98, C.I. Pigment Yellow-114, C.I. Pigment Yellow-128, C.I. Pigment Yellow-129, C.I. Pigment Yellow-151, C.I. Pigment Yellow-154 and the like.

In the aqueous dispersion of the present invention, self-dispersible pigments in water are also usable. As the water-dispersible pigments, there is pigments which adsorb a polymer on their surface and thus use its steric hindrance, and which use electrostatic repulsion force. Commercial products of the pigments are CAB-0-JET200, CAB-0-JET300 (both by Cabot), and Microjet Black CW-1 (by Orient Chemical) and the like.

Preferably, An amount of the pigment is from 0.1 to 50 % by weight based on the weight of the ink. If the pigment content is less than 0.1 % by weight, sufficient image density could not be obtained, and if it is greater than 50 % by weight, image fixation may go bad. More preferable range of the pigment content is 0.5 % by weight to 30 % by weight.

A known dye may be used in the ink of the present invention, including, for example, water-soluble dyes such as direct dyes, acid dyes, basic dyes, reactive dyes, and insoluble disperse dyes containing dyes for foods. These are mentioned below.

For example, water-soluble dyes are:
direct dyes such as C.I. Direct Black, -17, -19, -22, -32, -38, -51, -62, -71, -108, -146, -154;
C.I. Direct Yellow, -12, -24, -26, -44, -86, -87, -98, -100, -130, -142;
C.I. Direct Red, -1, -4, -13, -17, -23, -28, -31, -62, -79, -81, -83, -89, -227, -240, -242, -243;
C.I. Direct Blue, -6, -22, -25, -71, -78, -86, -90, -106, -199;
C.I. Direct Orange, -34, -39, -44, -46, -60;
C.I. Direct Violet, -47, -48;
C.I. Direct Brown, -109;
C.I. Direct Green, -59; and the like;
acid dyes such as C.I. Acid Black, -2, -7, -24, -26, -31, -52, -63, -112, -118, -168, -172, -208;
C.I. Acid Yellow, -11, -17, -23, -25, -29, -42, -49, -61, -71;
C.I. Acid Red, -1, -6, -8, -32, -37, -51, -52, -80, -85, -87, -92, -94, -115, -180, -254, -256, -289, -315, -317;
C.I. Acid blue, -9, -22, -40, -59, -93, -102, -104, -113, -117, -120, -167, -229, -234, -254;
C.I. Acid Orange, -7, -19;
C.I. Acid Violet, -49; and the like;
reactive dyes such as C.I. Reactive Black, -1, -5, -8, -13, -14, -23, -31, -34, -39;
C.I. Reactive Yellow, -2, -3, -13, -15, -17, -18, -23, -24, -37, -42, -57, -58, -64, -75, -76, -77, -79, -81, -84, -85, -87, -88, -91, -92, -93, -95, -102, -111, -115, -116, -130, -131, -132, -133, -135, -137, -139, -140, -142, -143, -144, -145, -146, -147, -148, -151, -162, -163;
C.I. Reactive Red, -3, -13, -16, -21, -22, -23, -24, -29, -31, -33, -35, -45, -49, -55, -63, -85, -106, -109, -111, -112, -113, -114, -118, -126, -128, -130, -131, -141, -151, -170, -171, -174, -176, -177, -183, -184, -186, -187, -188, -190, -193, -194, -195, -196, -200, -201, -202, -204, -206, -218, -221;
C.I. Reactive Blue, -2, -3, -5, -8, -10, -13, -14, -15, -18, -19, -21, -25, -27, -28, -38, -39, -40, -41, -49, -52, -63, -71, -72, -74, -75, -77, -78, -79, -89, -100, -101, -104, -105, -119, -122, -147, -158, -160, -162, -166, -169, -170, -171, -172, -173, -174, -176, -179, -184, -190, -191, -194, -195, -198, -204, -211, -216, -217;
C.I. Reactive Orange, -5, -7, -11, -12, -13, -15, -16, -35, -45, -56, -62, -70, -72, -74, -82, -84, -87, -91, -92, -93, -95, -97, -99;
C.I. Reactive Violet, -1, -4, -5, -6, -22, -24, -33, -36, -38;
C.I. Reactive Green, -5,-8, -12, -15, -19, -23;
C.I. Reactive Brown, -2, -7, -8, -9,-11, -16, -17, -18, -21, -24, -26, -31, -32, -33; and the like; as well as,
C.I. Basic Black, -2;
C.I. Basic Red, -1, -2, -9, -12, -13, -14, -27;
C.I. Basic Blue, -1, -3, -5, -7, -9, -24, -25, -26, -28, -29;
C.I. Basic Violet, -7, -14, -27;
C.I. Food Black, -1, -2; and the like.

The colorants mentioned above are especially favorable for the ink of the present invention, but the colorants to be used in the ink of the present invention are not limited to those mentioned above.

Preferably, an amount of the dye used in the ink of the present invention is from 0.1 to 50 % by weight based on the weight of the ink. If the dye content is less than 0.1 % by weight, sufficient image density could not be obtained; and if it is greater than 50 % by weight, image fixation goes bad. More preferable dye content ranges from 0.5 % by weight to 30 % by weight.

A combination of dye and pigment may be used in the present invention.

### Additives

The ink composition according to the present invention may optionally contain various additives and auxiliaries.

One example of additives is a dispersion stabilizer that allows a pigment to become stably dispersed in a solvent. The ink composition according to the present invention has the function of dispersing a pigment or dye along with the polymer having the polyvinyl ether structure. But, if the dispersion of the pigment or dye is insufficient, other dispersion stabilizer may be added.

As other dispersion stabilizer, a resin or a surfactant may be used that has both hydrophilic segments and hydrophobic segments.

The resins having both hydrophilic segments and hydrophobic segments include, for example, a copolymer of a hydrophilic monomer and a hydrophobic monomer. The hydrophilic monomers include, for example, acrylic acid, methacrylic acid, maleic acid, fumaric acid, and monoesters of such carboxylic acids, vinylsulfonic acid, styrenesulfonic acid, vinyl alcohol, acrylamide, methacryloxyethyl phosphate or the like. The hydrophobic monomers include, for example, styrene, styrene derivatives such as α-methylstyrene, vinylcyclohexane, vinylnaphthalene derivatives, acrylates, and methacrylates or the like. Here, various types of copolymers may be used such as having random, block or graft copolymer structure. Of course, both the hydrophilic monomers and the hydrophobic monomers are not limited to those monomers mentioned above.

The surfactant to be used may comprise anionic, nonionic, cationic or ampholytic surfactant.

Suited anionic surfactants include, for example, salts of fatty acids, salts of alkylsulfates, alkylarylsulfonates, alkyl-diarylether disulfonates, dialkylsulfosuccinates, alkylphosphates, naphthalenesulfonic acid-formalin condensates, salts of polyoxyethylene-alkylphosphates, and glycerol borate fatty acid esters.

Suited nonionic surfactants include, for example, polyoxyethylene alkyl ethers, polyoxyethylene-oxypropylene block copolymers, sorbitan fatty acid esters, glycerin fatty acid esters, polyoxyethylene fatty acid esters, polyoxyethylene alkylamines, fluorine-containing surfactants, and silicon-containing surfactants.

Suited cationic surfactants include, for example, alkylamine salts, quaternary ammonium salts, alkylpyridinium salts, and alkylimidazolium salts.

Suited ampholytic surfactants include, for example, alkylbetaines, alkylamine oxides, and phosphatidyl choline. The surfactant to be used is not restricted to those surfactants mentioned above.

The ink composition of the present invention and containing a block polymer, may additionally a contain crosslinking agent having the function of crosslinking the block polymer in the ink composition. This composition constitutes a favorable ink composition of the present invention.

The crosslinking agent-containing composition as mentioned above may be provided as a separate composition separated from the ink composition of the present invention, and both compositions may be contacted with each other at any desired time during use. Specifically, in case of an inkjet ink a first tank may be provided filled with the ink composition of the present invention, and a second tank may be provided filled with the crosslinking agent-containing composition.

The two different compositions are separately ejected from the respective tanks onto a recording medium on which the two different compositions may be contacted with each other. Alternatively, a crosslinking agent-containing composition is previously provided on a recording medium, and an ink composition of the present invention is ejected later on on this recording medium on which the two different compositions are contacted with each other.

Further, an aqueous solvent may optionally added to the ink composition of the present invention. This aqueous solvent is effective for preventing the ink from drying and solidifying around nozzles. One or more different types of aqueous solvents may be used alone or as a mixture. The aqueous solvent may be the same as those described above. For an ink, composition the content of the aqueous solvent may preferably amount 0.1 to 60 % by weight, even more preferred 1 to 25 % by weight, each based on the total amount of the ink composition.

Further, the ink, composition may contain other additives, such as a pH controlling agent that ensures the stabilisation of the ink and the stability of ink within the ink pipes of a recording apparatus; further a penetrant having the ability to enhance ink penetration into recording media and to accelerate the apparent ink drying on those media; further an antifungal agent to prevent the development of fungi in the ink; further a chelating agent that sequesters metal ions in the ink to thereby prevent deposition of metal around nozzles and prevent deposition of insoluble solids in the ink; further a defoaming agent that prevents the ink from foaming of a recording liquid during circulation, moving or at the time of production of the recording liquid; and further, antioxidants, antifungal agents, viscosity controlling agents, electrically conductive agents, UV absorbents, water-soluble dyes disperse dyes and oil-soluble dyes. In the following, the ink jet ink formulated as an aqueous dispersion ink and constituting a preferred embodiment of the ink composition according to the present invention is described in more detail.

### Method of preparing an inkjet ink

The preparation method of the inkjet ink of the present invention, for example, comprises adding pigment and dispersion stabilizer to water and water-soluble solvent, dispersing them by the use of a dispersing machine, removing coarse particles by centrifugation, then adding water or solvent and additives thereto, stirring and mixing them, and filtering the resulting mixture.

The dispersing machine includes, for example, ultrasonic homogenizers, laboratory homogenizers, colloid mills, jet mills and ball mills, and one or more of these may be used alone or a combination thereof.

In case where a self-dispersible pigment is used, ink compositions of the present invention may also be prepared in the same manner as mentioned above.

### Image-forming Method and Image-forming Apparatus

The aqueous dispersion ink of the present invention can be used in various types of image-forming apparatus, such as inkjet printing, electrophotography and the like, and an image formation is effected by an image formation method employing the apparatus.

In the case of using an aqueous dispersion of the present invention as inkjet ink, the aqueous dispersion is used according to following examples. The ink coagulates by the stimulation (a) to (d) mentioned below.
(a) In the case used as ink responsive to temperature stimulation:
   The difference between the temperature of the ink in a ink tank and the temperature of the ink adhered on a recording medium by ejecting becomes a cause of a thermal stimulation, whereby the phase change of inkjet ink of the present invention occurs and leads to rapid thickness or aggregation of insoluble components.
(b) In the case used as ink responsive to electromagnetic wave stimulation:
   The difference between the ink of the present invention in a dark chamber and the ink irradiated by visible light or by electromagnetic waves emitted from an electromagnetic waves-emitting unit in an inkjet recording apparatus causes a phase change of inkjet ink of the present invention and leads to rapid thickness or aggregation of insoluble components.
(c) In the case used as ink responsive to pH change stimulation:
   The pH of the ink in an ink tank differs from that of the ink adhered on a recording medium by the pH change of the ink according to an influence of the recording medium. Thus, a phase change of inkjet ink of the present invention occurs and leads to rapid thickness or aggregation of insoluble components.
(d) In the case used as ink responsive to concentration change stimulation:
   The difference between the concentration of the ink in an ink tank and that of the ink adhered on a recording medium is produced by evaporation of water or the aqueous solvent in the ink, or by absorption of them into the recording medium. The phase change of inkjet ink of the present invention occurs by the difference, and leads to rapid thickness or aggregation of insoluble components.

The change of the ink properties can improve a resistance against color blurring and feathering and provides excellent ink fixation. The changes of ink properties are not limited to only the thickness and the aggregation of insoluble components mentioned above.

Various methods may be employed for applying stimulation to the ink. One preferred method comprises mixing a stimulating composition with the stimulation responsive ink or contacting it with the ink. For the pH-responsive ink of above (b) for example, an inkjet process may be applied as mixing the ink with a desired pH-controlling composition. As disclosed in JP-A 63185/1989, a stimulating composition may be ejected through an inkjet head onto the entire area of forming an image; or as disclosed in JP-A 216392/1996, the amount of the stimulating composition may be controlled to ensure better image formation.

The stimulating composition may doubles as an ink composition containing dye or pigment. For example, any ink of cyan-magenta-yellow-black (CMYK) inks used in a color inkjet process may be a stimulating ink, and any other ink of CMYK inks may be a stimulation-responsive ink to improve the resistance against the color blurring. Regarding the matter as to which of CMYK is a stimulation-responsive ink and which of other CMYK is a stimulating ink, there are various combinations of inks. In the present invention, any combination of inks is employable with no limitation on the selection. Regarding the type of the stimulating composition and the type of the stimulation-responsive inks, all the stimulation-responsive patterns mentioned above are employable in the present invention with no specific limitation thereon.

In one embodiment of the present invention, the stimulating composition to be used includes a composition that contains an additive having the function of crosslinking the block polymer in a block polymer-containing ink composition. Specifically, in one preferred embodiment of the image-forming method of the present invention, a stimulation-responsive ink composition which contains a block polymer, a solvent and a pigment or dye is contacted with a composition which contains an additive (crosslinking agent) capable of crosslinking with the block polymer as the composition for stimulating the ink composition, whereby the ink composition is fixed on a recording medium to form a good image. Specifically, the pigments mentioned above are represented as examples.

The block polymer in the ink composition is preferably amphiphilic; and the solvent is preferably water. In the composition of the type, the block polymer forms micelles and well disperses the pigment. In that manner, since most of the block polymer do not dissolve in molecular state but disperse in micelle state, whereby the ink composition of the present invention realizes relatively low viscosity. The block polymer comprises a polyvinyl ether structure, and invention, the ink composition is contacted with a composition that contains a crosslinking agent capable of reacting with a part of the block polymer or forming a complex with the block polymer, whereby the micelles form a network structure and the ink is thickened and exhibits sufficient image fixation. Accordingly, the image-forming method of using said composition of the present invention provides good fixability.

In case where the inkjet ink composition of the present invention is contacted with the above-mentioned, crosslinking agent-containing composition, the two compositions may be provided separately. For example, the inkjet ink composition and the crosslinking agent-containing composition are stored in separate packages, and they may be contacted with each other in any desired time in use. One specific method of image formation in a case of employing inkjet ink comprises providing a separate ink tank that contains an ink composition of the present invention and providing a further ink tank that contains a crosslinking agent-containing composition, and separately ejecting the two compositions onto a recording medium on which they are contacted with each other to form an image. Another method comprises previously applying a crosslinking agent-containing composition onto a recording medium by applying or spraying, and then ejecting an ink composition of the present invention onto the recording medium on which the two compositions are contacted with each other to form an image.

In case where the composition of the present invention is contacted with such a crosslinking agent-containing composition, when the concentration of the crosslinking agent may be increased or a polyfunctional crosslinking agent may be used, the composition of the present invention may be changed to gel. In the image-forming method of the present invention that uses a crosslinking agent, the block polymer comprises a polyvinyl ether structure. Preferred monomers for forming the block polymer having the polyvinyl ether structure include those of formulae (I-a) to (I-o) mentioned above. In one preferred embodiment wherein the ink composition of the present invention is contacted with a crosslinking agent-containing composition the ink composition comprises, a block polymer having polyvinyl ether structure, and comprising structural units according to formulae (II-a) to (II-e) mentioned above.

For the ink composition which contains a block polymer having polyvinyl ether structure and which is preferably used in the present invention, a compound having carboxyl group as functionality is preferred for the crosslinking agent. This is because the carboxyl group of the crosslinking agent can readily interact with the side chains of oxyethyleneoxy structure units of the polymer, such as those of the structural examples of the polymer mentioned above, to form a complex. Since the compound having carboxyl group serves as a crosslinking agent, it is desirable that the compound has plural carboxyl groups. Therefore, the compound having carboxyl group includes, for example, dicarboxylic acids, tricarboxylic acids and polycarboxylic acids. Specific examples of the compound are low-molecular or high-molecular polyfunctional carboxylic acid compounds such as HOOC-(CH₂)ₚ-COOH, HOOC-(CH₂)ₚCH(COOH)(CH₂)_{q}-COOH, polyacrylic acid, polymethacrylic acid, polymethyl acrylate-acrylic acid copolymer, polymethyl methacrylate-methacrylic acid copolymer. In these formulae, p is an integer from 1 to 40, and q is an integer from 1 to 40.

It is also desirable that a means which causes stimulation is previously applied to the recording media. For example, using an acid-responsive ink among the pH-responsive inks of the present invention, a record is performed on acid paper. In this case, the recording medium has the function of stimulating the stimulation-responsive ink of the present invention.

Inkjet printers using the inkjet ink of the present invention may include various types of inkjet recording apparatus, for example, a piezo-inkjet recording system using a piezoelectric element, or a thermal inkjet recording system wherein the ink is foamed by application of thermal energy and is ejected onto a recording medium to perform a record.

In the inkjet recording apparatus of the present invention, for example, the amount of the ink to be ejected through the orifices of the inkjet head preferably ranges of from 0.1 picoliters to 100 picoliters.

One embodiment of the inkjet recording apparatus, comprises a means for contacting a stimulation-responsive ink composition that contains a block polymer, a solvent and a pigment or dye, with a composition containing an additive (crosslinking agent) capable of crosslinking the block polymer as composition that stimulates the ink composition. In this embodiment, the two compositions are contacted with each other whereby the ink composition is fixed on a recording medium to form a sufficient image.

In the inkjet recording apparatus of the present invention, the means for contacting the inkjet ink composition of the present invention with the above-mentioned composition containing crosslinking agent is not restricted. For example, the two compositions may be provided separately, and may be contacted with each other in any desired time in use. For example, the inkjet ink composition and the crosslinking agent-containing composition are stored in separate packages, and they may be contacted with each other in any desired time in use. For example, the inkjet recording apparatus may comprise a separate ink tank that contains an ink composition of the present invention therein and may comprise a further tank that contains a crosslinking agent-containing composition; both liquids are transferred into inkjet heads, and are separately ejected the onto a recording medium on which they are contacted with each other. Alternatively, the inkjet recording apparatus may comprise means which previously apply a crosslinking agent-containing composition onto a recording medium by depositing or spraying, and then ejecting an ink composition of the present invention onto the recording medium on which the two compositions are contacted with each other.

The aqueous dispersion ink composition of the present invention may be used in an indirect recording apparatus in which the ink is applied onto an intermediate transfer medium and then an image formed thereon is transferred onto a recording medium such as paper. In addition, it may also be used in a direct recording apparatus that uses an intermediate transfer medium.

In particular, the ink composition of the present invention is favorable to an image-forming method and an image-forming apparatus of electrophotography. For example, the electrophotography image-recording apparatus comprises a photoconductor drum to form a latent image, a means, for example a light exposure unit to form a latent image on the drum, an ink-releasing unit, a transfer mechanism, and a recording medium. For forming an image on the recording medium with an apparatus of said type, a latent image is formed on the photoconductor drum, then an ink composition of the present invention is applied to the latent image or to another part than the latent image, and the resulting image is transferred and fixed on the recording medium by the transfer mechanism.

Next described is the outline of an inkjet recording apparatus with reference to Fig. 1. Fig. 1 shows one example of the configuration of an inkjet recording apparatus, and is not intended to restrict the scope of the present invention.

Fig. 1 is a block diagram showing an inkjet recording apparatus.

Fig. 1 illustrates a case of recording an image on a recording medium by moving the head in the apparatus. In Fig. 1, the head 70 is driven in X-Y direction by means of an X-direction driving motor 56 and by means of a Y-direction driving motor 58, which are connected to a CPU 50 which controls the entire movement by means of a X-motor driving circuit 52 and by means of a Y-motor driving circuit 54, respectively. According to the indication of CPU, the X-direction driving motor 56 and the Y-direction driving motor 58 are driven under the control of the X-motor driving circuit 52 and of the Y-motor driving circuit 54, respectively, and the position of the head 70 relative to a recording medium is thereby determined.

As shown in Fig. 1, a head driving circuit 60 is connected to the head 70, and the CPU 50 controls the head driving circuit 60, in order to control the head 70 to eject inkjet ink and the like. In addition, an X-encoder 62 and a Y-encoder 64 detecting the head position are connected to the CPU 50, and the head position information is inputted into the CPU 50. Further, a control program is inputted into the program memory 66. Based on the position information from the control program, from the X-encoder 62 and from the Y-encoder 64, the head 70 is moved into a desired position on a recording medium, and inkjet ink is ejected. In that manner, a desired image is recorded on the recording medium. In case where plural inkjet inks are loaded in the image-recording apparatus, the above-mentioned operation is repeated for every inkjet ink.

After the inkjet ink has been ejected, if desired, the head 70 may be moved to a position of a cleaning means (not shown) which removes excess ink from the head 70, whereby the head 70 can be cleaned by wiping. Any conventional method may be used, for cleaning the head.

After an image recording is completed, the recorded medium is transferred by a transfer mechanism (not shown), and a new recording medium is set in the apparatus.

Within the scope and the sprit of the present invention, the embodiment of the present invention illustrated hereinabove may be modified or changed. For example, although the above illustrated embodiment mentioned, in which the head 70 is moved in X-Y direction is described, the image recording is performed by moving the head in X-direction (or Y-direction) only and the recording medium in Y-direction (or X-direction) with linking them each other.

In the present invention, a head having a thermal energy-generating means, for example an electro-thermal transducer or laser, for generating the thermal energy which is used as the energy source for ejecting the inkjet ink, provides a superior result. Specifically, fine and precision images may be formed, with said system. A superior image recording is achieved by using the inkjet ink of the present invention.

Regarding the configuration and the principle of a typical apparatus equipped with the thermal energy-generating means, the basic principles are disclosed, for example, in USP 4,723,129 and 4,740,796 and are preferably used in carrying out the present invention. The system disclosed may be applied to both to an on-demand type and to a continuous type, but is especially is effective with the on-demand type. The on-demand type generates, at least one driving signal, which causes a rapid temperature increase exceeding the nucleate boiling and corresponding to the eject information; this driving signal is applied to an electro-thermal transducer containing a liquid and located along the path, thus providing thermal energy which causes film boiling on a heated surface of the head, and, as a result, foams corresponding in a one-to-one manner to the driving signal are formed in the liquid. With growth and contraction of the foam, the liquid is ejected from ejecting openings, and at least one droplet is formed. A pulse-shape driving signal is is more preferred since the growth and contraction of the foam may be attained immediately, and a liquid ejection of superior responsiveness is achieved. Preferred pulse-shaped driving signals, are described in USP 4,463,359 and 4,345,262. The conditions as described in USP 4,313,124, are related to the rate of temperature increase of the heated surface, and provide more effective ejection.

USP 4,558,333 and 4,459,600 disclose a head configuration wherein the heated surface is located at a bending portion; this head configuration may be used in addition to a configuration combining the ejecting opening, the liquid flow path and the electro-thermal transducer as disclosed in the above-mentioned patent specifications. In addition, the present invention provides effective results, when the invention is adopted to other head configurations, such as based on JP-A 123670/1984 disclosing the configuration wherein, a common slit is used as an ejecting portion for plural electro-thermal transducers of the electro-thermal transducer, or based on JP-A 138461/1984 disclosing the configuration wherein an opening enabled absorbe the pressure waves of thermal energy corresponds to an ejecting portion. In other words, even any type of the head is used, an inkjet ink according to the present invention is ejected reliably and efficiently.

Further, the present invention may also be conveniently applied to the head of a full-line type having a length corresponding to the maximum width of the recording media in the image-forming apparatus of the present invention. This head may have a configuration wherein several head units are combined to provide the intended length of the head, or the head may be integrated as one head.

Still further, the present invention is also effective in a serial-type apparatus where the head is fixed to the body of the image-forming apparatus, or where the head is an exchangeable chip-type head which, when mounted on the body of the image-forming apparatus, may be electrically connected to the body and supplied with ink from the body.

The apparatus of the present invention may be provided with a means for removing a liquid drop; this enables a much better ejecting effect.

Addition of any preliminarily auxiliary means is preferred since the effect of the present invention may be further stabilized. Specifically, the additional preliminary means includes a capping for head means; a pressure or suction means; an electro-thermal transducer or other heating elements, or a means for pre-heating comprising a combination of these; and a pre-ejecting means for ejection different from a means for ejecting ink.

The most effective apparatus for the present invention enables to realize the above-mentioned film boiling manner.

The present invention may provide the apparatus having a good dispersion stability. In particular, the present invention may provide the apparatus having good dispersion stability at a temperature of 20°C or lower, especially at 10°C or lower.

The means for providing the apparatus having good dispersion stability at a temperature of 20°C or lower, and preferably at 10°C or lower, is the use of a component which contains a polymer wherein at least a part of the polymer structure changes from a state compatible with a solvent to the state incompatible to said solvent at a temperature of 20°C or lower, and preferably at 10°C or lower.

### EXAMPLES :

The present invention is described in more detail with reference to the following Examples, however, the present invention is not limited to those Examples.

### Preparation of Polymer

### Preparation of Monomers :

2-Methoxyethyl vinyl ether (hereinafter referred to as MOVE) and 2-ethoxyethyl vinyl ether (hereinafter referred to as EOVE) were prepared by refluxing 2-chloroethyl vinyl ether and sodium methoxide or sodium ethoxide in the presence of tetrabutylammonium iodide as catalyst, (H. J. Schneider, USP 3,062,892 (1962)). 2-Vinyloxyethyl methacrylate (hereinafter referred to as VEM) was prepared by Williamson reaction.

### 1) Preparation of random polymer of MOVE and VEM:

### Preparation of Random Polymer:

A glass container equipped with a three-way cock was purged with nitrogen, and heated under nitrogen atmosphere at 250°C to remove the adsorbed water. Following cooling to room temperature, 21.8 mmols of MOVE, 2.2 mmols of VEM, 16 mmols of ethyl acetate, 0.1 mmols of 1-isobutoxyethyl acetate, and 11 ml of toluene were introduced into the container. When the temperature of the reactants reached 0°C, 0.2 mmols of ethylaluminium sesquichloride were added to initiate a polymerization reaction to obtain a random polymer composed of MOVE and VEM. The molecular weight of the polymer was monitored at a given interval using gel permeation chromatography (GPC), and 0.3 wt% ammonia/methanol solution was added to the system to stop the polymerization. After the reaction was completed, dichloromethane was added to the reaction mixture to dilute the mixture; thereafter mixture was washed three times with 0.6 N HC1 solution and then three times with distilled water, concentrated to dryness by means of an evaporator, and dried under vacuum to provide an intended random polymer composed of MOVE and VEM. The compound was identified by NMR and GPC, both of which gave satisfactory spectra. The number-average molecular weight (hereinafter referred to as Mn); Mn = 2.7 x 10⁴; and the molecular weight distribution (hereinafter referred to as Mn/Mw), Mn/Mw = 1.3.

### 2) Preparation of AB diblock polymer of MOVE and EOVE

### (A polymer sensitive to external stimulation by temperature change):

### Preparation of Monomers:

The monomers are prepared in the same manner as described above under 1).

### Production of AB Diblock Polymer:

A glass container equipped with a three-way cock was purged with nitrogen, and heated under nitrogen atmosphere at 250°C to remove the adsorbed water. Following cooling to room temperature, 12 mmols of MOVE, 16 mmols of ethyl acetate, 0.1 mmols of 1-isobutoxyethyl acetate, and 11 ml of toluene were introduced into the reactor. When the temperature of the reactants reached 0°C, 0.2 mmols of ethylaluminium sesquichloride were added to initiate a polymerization reaction to prepare a component A of AB block polymer. The molecular weight of the polymer was monitored at a given interval using gel permeation chromatography (GPC). After the polymerization of the component A was completed, 12 mmols of EOVE that is a component B was added and polymerization was continued. The polymerization was stopped by adding 0.3 wt% ammonia/methanol solution to the system. After the reaction was completed, dichloromethane was added to he reaction mixture to dilute the mixture; thereafter the mixture was washed three times with 0.6 N HCl solution and then three times with distilled water, concentrated to dryness by means of a evaporator, and dried under vacuum to provide an intended MOVE-EOVE diblock polymer. The compound was identified through NMR and GPC, both of which gave satisfactory spectra. Mn = 2.5 x 10⁴; Mn/Mw = 1.3.

### 3) Production of AB diblock polymer of MOVE and VEM

### (A polymer sensitive to external stimulation by light and heat):

### Production of AB Diblock Polymer:

A glass container equipped with a three-way cock was purged with nitrogen, and heated under nitrogen atmosphere at 250°C to remove the adsorbed water. Following cooling to room temperature, 12 mmols of MOVE, 16 mmols of ethyl acetate, 0.1 mmols of 1-isobutoxyethyl acetate, and 11 ml of toluene were introduced into the container. When the temperature of the reactants reached 0°C, 0.2 mmols of ethylaluminium sesquichloride was added to initiate a polymerization reaction to obtain a component A of AB block polymer. The molecular weight of the polymer was monitored at a given interval using gel permeation chromatography (GPC), After the polymerization of the component A was completed, 12 mmols of VEM that is a component B was added and polymerization was continued. The polymerization was stopped by adding 0.3 wt% ammonia/methanol solution to the system. After the reaction was completed, dichloromethane was added to the reaction mixture to dilute the mixture, thereafter the mixture was washed three times with 0.6 N HCl solution and then three times with distilled water, concentrated to dryness by means of an evaporator, and dried under vacuum to provide an intended MOVE-VEM diblock polymer. The compound was identified through NMR and GPC, both of which gave satisfactory spectra. Mn = 2.6 x 10⁴; Mn/Mw = 1.3.

Other block polymers were prepared in the same manner.

### Preparation of Pigment Dispersion Ink of the present invention :

### Example 1:

### Method of Preparing Inkjet Ink of the Present Invention

This Example demonstrates the preparation of a black ink only. Other color inks may be prepared in the same manner as shown in below (except that the composition of the pigment is changed to the respective color pigment.

Pigment, polymer having polyvinyl ether structure, and diethylene glycol were added to ion-exchanged water, and dispersed with an ultrasonic homogenizer. The dispersion was centrifuged (20,000 rpm x 20 min) to remove coarse particles, and the pigment dispersion was obtained.

A suitable amount of aqueous solvent, ion-exchange water and additive were added to the above pigment dispersion and filtered through a 1 µm-filter under pressure to prepare an inkjet ink (total amount, 100 parts).

Using the pigment dispersion as prepared above, various stimulation-responsive inks were prepared.

### (a) Inkjet ink responsive to a stimulation of concentration change:

According to the method of preparing an inkjet ink as mentioned above, an inkjet ink (a) having the below mentioned composition was prepared.

**Table 1**

| Ingredient | Content (parts by weight) |
|---|---|
| Carbon black (Cabot's MOGUL L) | 5 |
| MOVE-b-EOVE prepared in above 2) (MOVE:EOVE = 1:1, Mw/Mn = 1.3) | 4 |
| Diethylene glycol | 4 |
| Polyethylene glycol #400 | 2 |
| Surfactant (Pluronic PE3100, by BASF) | 0.2 |
| Ion-exchange water | balance |
| Total | 100 |

| | |
|---|---|
| * : -b- is an abbreviation to define a block polymer | |

### (b) Inkjet ink responsive to a stimulation of pH change:

According to the method of preparing an inkjet ink as mentioned above, an inkjet ink (b) was prepared using the same composition of the inkjet ink (a) above,

### (c) Inkjet ink responsive to a stimulation of temperature change:

According to the method of preparing an inkjet ink mentioned as above, an inkjet ink (c) was prepared using the same composition of the inkjet ink (a) above.

### Comparative Example 1:

### Method of Preparing Inkjet Ink containing Self-Dispersible Pigment

According to the same manner as used in Example 1 (except that a polymer having polyvinyl ether structure was not used), an inkjet ink was prepared using the composition mentioned below.

**Table 2**

| Ingredient | Content (parts by weight) |
|---|---|
| Self-dispersible pigment (CAB-0-JET300, by Cabot) | 5 |
| Diethylene glycol | 4 |
| Polyethylene glycol #400 | 2 |
| Surfactant (Nonion E-230, by Nippon Yushi) | 0.2 |
| Ion-exchange water | balance |

### Ink Bulk Characteristic:

The bulk characteristics of the above inks (a), (b) and (c) are described below.

After cooled to 10°C, 15 parts by weight of block polymer MOVE-b-EOVE was added to 100 parts by weight of the ink (a), and dissolved. The obtained ink was heated up to 45°C, and rapidly thickened and gelled. It is thought that the reason is, that, at low temperatures, the EOVE blocks are hydrophilic and the block polymer entirely dissolved in the solvent, but when heated up to 45°C, the EOVE blocks were changed to hydrophilic and gelled. This means that the block polymer MOVE-b-EOVE exhibits good dispersion at 45°C when its concentration is low, whereas the block polymer was caused a change to gel at that temperature when its concentration is high.

When the pH of the ink (b) was adjusted to 3 by adding an aqueous solution of 5 wt% polyacrylic acid having a pH of 2 to the ink (b), then a black color precipitation is appeared, and a gel is also generated partly. It is thought that the reason is that a complex of the carboxylic acid moiety of polyacrylic acid with the block polymer is formed.

At room temperature, carbon black is well dispersed in the ink (c), but when heated up to 85°C, the black color precipitation is formed. It is thought that the reason is that the MOVE blocks of the block polymer changed to hydrophobic at the elevated temperature and the pigment dispersibility in the ink was thereby lowered.

### Print Test

### Example 2:

The inkjet inks as prepared according to Example 1 and Comparative Example 1 were tested for fixation strength. The inkjet inks of Example 1 and Comparative Example 1 were respectively charged in the print head of an EPSON Stylus COLOR 900 machine (by EPSON), and an image was recorded on plain paper using the printer.

Evaluation was carried out by pressing another white plain paper on the recording area of the printed paper under the weight of 4.9 x 10⁴ N/m², and checking as to whether or not ink is adhered on the white plain paper.

### (a) Evaluation of Inkjet Ink responsive to Stimulation caused by Concentration Change:

In printing with the inkjet ink on paper, the printing is performed under heating an area received an ejected ink in the inkjet printer at about 40°C.

### Evaluation of fixation strength:

No ink adhesion on the white plain paper was observed. It is thought that the reason is that the aqueous solvent was evaporated, or was absorbed by the recording medium, and, as a result, the concentration of MOVE-b-EOVE exceeded the critical phase transition concentration to cause phase transition.

### (b) Evaluation of Inkjet Ink responsive to Stimulation caused by pH change:

In printing with the inkjet ink of the present invention, the recording medium of plain paper was previously sprayed with an aqueous solution of 5 wt% polyacrylic acid having a pH of 4, to enable the recording paper to give stimulation. The printing is performed to this recording medium in the same manner as stated above.

### Evaluation of Fixation Strength:

No ink adhesion on the white plain paper was observed. It is thought that the reason is that the polymer MOVE-b-EOVE formed a complex with the polyacrylic acid.

### (c) Evaluation of Inkjet Ink responsive to Stimulation caused by Temperature Change:

In printing with the inkjet ink of the present invention, on paper, the printing is performed under heating an area received an ejected ink in the inkjet printer at about 80°C.

### Evaluation of Fixation Strength:

No ink adhesion on the white plain paper was observed.

It is thought that a phase transition of MOVE-b-EOVE occurred by heating at 80°C.

### Comparative Example 2:

### Evaluation of Inkjet Ink employing Self-Dispersible Pigment:

A printing was carried out using the inkjet ink as prepared according to Comparative Example 1.

Compared with the inkjet ink of the present invention of Example 1, it took a longer time to dry the ink.

### Evaluation of Fixation Strength:

Ink adhesion on the white plain paper was observed.

### Example 3:

An ink was prepared using the same composition according to Example 1, except for employing C.I. Food Black 2 that is a water-soluble dye in place of carbon black in the Example 1. The ink was tested and evaluated by stimulating the stimulation-response as caused by pH change which is described in Example 2, b). The same good result is obtained as reported in Example 2, b) above.

### Comparison Example :

A cyan ink with pH 3 or more was prepared using the following composition which employed cyan dye C.I. Basic Blue 75.

**Table 3**

| Ingredient | Content (parts by weight) |
|---|---|
| Diethylene glycol | 10 |
| Isopropyl alcohol | 2 |
| Urea | 5 |
| Polyacrylic acid | 4 |
| Cyan dye, C.I. Basic Blue 75 | 3 |
| 1N HCl solution Ion-exchange water | 3 balance |
| Total | 100 |

Using the prepared ink as cyan ink and the black ink (a) of Example 1, a stripe pattern of cyan and black was printed on plain paper with Canon's printer, BJC-600J. The printing was carried out under the same condition using an ink attached to BJC-600J printer. The printed samples were evaluated visually. The result is that the degree of color blurring in the samples printed with the inks of the present invention was lower than the color blurring obtained with the samples printed with the cyan ink attached BJC-600J printer.

### Example 5:

An inkjet ink using the composition of above Table 1 was prepared except for employing as block polymer, MOVE-b-VEM as prepared in the above Example 3). The printing test for the the stimulation-responsiveness as caused by pH change, was performed in the same manner as in Example 2. That is, the recording medium of plain paper was previously sprayed with an aqueous solution of 5 wt% polyacrylic acid having a pH of 4, to enable the recording paper to give stimulation. The inkjet printing was performed to this recording medium in the same manner as stated above. The same fixability as the previous Examples is observed.

The following Examples, serve to illustrate in more detail the printing by contacting a composition of the present invention with a stimulating composition. However, the present invention is not limited thereto.

### Example 6:

5 parts by weight of pigment (Cabot's MOGUL L), 4 parts by weight of the above AB block polymer of MOVE-b-VEM (Mn=2.6 x 10⁴, Mn/Mw=1.3), and 4 parts by weight of diethylene glycol were added to 87 parts by weight of ion-exchanged water, and dispersed with an ultrasonic homogenizer. The resulting dispersion was centrifuged (20,000 rpm x 20 min) to remove coarse particles, to provide the pigment dispersion.

The pigment dispersion was filtered through a 1 µm-filter under pressure to provide an inkjet ink.

The stimulating compositions were prepared as shown in below.
(i) 6 parts by weight of adipic acid, 5 parts by weight of diethylene glycol and 89 parts by weight of ion-exchange water were mixed to prepare a stimulating composition (i).
(ii) 3 parts by weight of polymethacrylic acid, 5 parts by weight of diethylene glycol and 92 parts by weight of ion-exchanged water were mixed to prepare a stimulating composition (ii).

### Print Test:

### Example 7:

Using the inkjet ink as prepared in Example 6, and the stimulating compositions (i) and (ii), the Evaluation of fixation strength was performed.

The inkjet ink and the stimulating compositions (i) and (ii) were respectively charged in the printing head of Canon's BJF800, and the printing onto a plain paper was performed. The inkjet ink, the composition (i) and (ii) were ejected in the same area of 1 cm² and printed. The ink fixation in that printed area was evaluated.

Evaluation was carried out by pressing another white plain paper on the recording area of the printed paper after 1 minute under the weight of 4.9 x 10⁴ N/m², and checking as to whether or not ink is adhered on the white plain paper.

### Ink Fixation Evaluation:

No ink adhesion on the white plain paper was observed.

### Bulk Characteristics of the Stimuli-Responsive Ink and the Crosslinking Agent-containing Compositions

One ml of the ink of Example 6 was mixed with 1 ml of the compositions (i) and (ii). The significantly thickness in both of two mixtures is observed. In particular, a gel was generated in the mixture of the ink of Example 6 with the composition (ii).

### Evaluation of Dispersion Stability :

### Example 8:

The ink having the composition as shown in Table 1 was employed to evaluate, the dispersion stability. The evaluation was performed by maintaining the ink still standing in a bath at constant temperature of 20°C and of 10°C, and visually observing the dispersion state after 40 days. As a result, the ink composition of the present invention generated no precipitation, and the superior dispersion stability is obtained at low temperature.

## Claims

1. An ink composition having a stimulation-responsiveness to change its property under stimulation, comprising a block polymer having polyvinyl ether structure, a solvent, and pigment or dye,
**characterized in that**
said block polymer having polyvinyl ether structure comprises two or more different hydrophilic blocks having an oxyalkylene structure in at least a part of the side chains thereof.

2. The ink composition as claimed in claim 1, wherein said solvent is water or an aqueous solvent.

3. The ink composition as claimed in claim 1 or 2, wherein said polymer is a polymer enhancing a dispersibility of pigment or dye in the ink composition.

4. The ink composition as claimed in claim 1, wherein said stimulation is at least one of selected from a temperature change, an irradiation with electromagnetic waves, a pH change of the composition, or a concentration change of the composition.

5. The ink composition as claimed in any one of claims 1 to 4, wherein a repeating unit structure of a polyvinyl ether structure in said polymer is represented by the following formula (1):
- (CH₂-CH(OR¹)) (1)
wherein
R' is selected from a group of -(CH(R²)-CH(R³)-O)ₗ- R⁴ or -(CH₂)ₘ-(O)ₙ-R¹; I and m are each independently selected from integers of from 1 to 12; n is 0 or 1; R² and R³ each independently represent H or CH₃; R⁴ represents H, a linear, branched or cyclic alkyl group having from 1 to 6 carbon atoms, Ph, Pyr, Ph-Ph, Ph-Pyr, -CHO, -CH₂CHO, -CO-CH = CH₂, -CO-C(CH₃)=CH₂, or -CH₂COOR⁵, and when R⁴ is a substituent other than hydrogen, the hydrogen atom on the carbon atom of the substituent may be substituted with a linear or branched alkyl group having from 1 to 4 carbon atoms or with F, Cl or Br, and the carbon atom in the aromatic ring of the substituent may be substituted with a nitrogen atom; and R⁵ represents H, or an alkyl group having from 1 to 5 carbon atoms.

6. The ink composition as claimed in any one of claims 1 to 5, further comprising a surfactant.

7. An image-forming method of forming an image by applying ink on a recording medium, **characterized by** using as ink the ink composition as claimed in any one of claims 1 to 6.

8. The image-forming method as claimed in claim 7, wherein ink is ejected by applying thermal energy to apply the ink onto the recording medium.

9. The image-forming method as claimed in claims 7 or 8, wherein the image is formed by contacting said ink composition and a substance giving stimulation to said ink composition to fix said composition on a recording medium; and wherein said substance giving stimulation to said composition contains a crosslinking agent that crosslinks with the block polymer in said ink composition.

10. The image-forming method as claimed in claim 9, wherein said ink composition forms micelles composed of the block polymer.

11. An image-forming apparatus for forming an image by applying ink on a recording medium, said apparatus containing an ink,
**characterized in that** the ink is the ink composition as claimed in any one of claims 1 to 6.

## Patentansprüche

1. Tintenzusammensetzung,
die auf eine Stimulierung mit einer Änderung ihrer Eigenschaft(en) reagiert und
die enthält:-
- ein, eine Polyvinylether-Struktur aufweisendes Blockpolymer
- ein Lösemittel und
- ein Pigment oder einen Farbstoff,
**dadurch gekennzeichnet, dass**
das die Polyvinylether-Struktur aufweisende Blockpolymer zwei oder mehr verschiedene hydrophile Segmente enthält, die in wenigstens einem Teil ihrer Seitenketten eine Oxyalkylen-Struktur aufweisen.

2. Tintenzusammensetzung nach Anspruch 1, bei der
das Lösemittel Wasser oder ein wässriges Lösemittel ist.

3. Tintenzusammensetzung nach Anspruch 1 oder 2, bei der
das Polymer ein solches Polymer ist,
das die Dispergierbarkeit des Pigmentes oder des Farbstoffes in der Tintenzusammensetzung erhöht.

4. Tintenzusammensetzung nach Anspruch 1, bei der
die Stimulierung ausgewählt ist aus einer Stimulierung wenigstens durch
- eine Temperaturänderung,
- eine Bestrahlung mit elektromagnetischen Wellen,
- eine pH-Änderung der Zusammensetzung, oder durch
- eine Änderung der Konzentration der Zusammensetzung.

5. Tintenzusammensetzung nach einem der Ansprüche 1 bis 4, bei der
die Polyvinylether-Struktur in dem Polymer wiederkehrende Struktureinheiten aufweist, die der nachfolgenden allgemeinen Formel (1) entsprechen.
**-(CH**_{**2**}**-CH(OR**^{**1**}**))** (1)
worin bedeutet
R¹- eine der Gruppen
-(CH(R²) -CH(R³) -O)ₗ-R⁴
oder
-(CH₂)ₘ-(O)ₙ-R¹;
worin wiederum bedeuten
"I" und "m": je - unabhängig voneinander - eine ganze Zahl von 1 bis 1 2;
"n": den Wert "O" oder "1";
R² und R³: je - unabhängig voneinander - H oder CH₃;
R⁴: H, eine geradkettige, verzweigte
oder cyclische Alkylgruppe mit 1 bis 6 Kohlenstoffatomen, Ph, Pyr, Ph-Ph, Ph-Pyr,
-CHO, -CH₂CHO, -CO-CH=CH₂,
-CO-C(CH₃) = CH₂ oder -CH₂COOR⁵;
wobei, wenn R⁴ ein anderer Substituent als H ist,
ein Wasserstoffatom an einem Kohlenstoffatom des Substituenten substituiert sein kann mit einer geradkettigen oder verzweigten Alkylgruppe mit 1 bis 4 Kohlenstoffatomen oder
mit F, Cl oder Br und wobei
ein Kohlenstoffatom in einem aromatischen Ring des Substituenten mit einem Stickstoffatom substituiert sein kann; und
R⁵: H oder eine Alkylgruppe mit 1 bis 5 Kohlenstoffatomen.

6. Tintenzusammensetzung nach einem der Ansprüche 1 bis 5, bei der die Zusammensetzung zusätzlich ein Tensid enthält.

7. Bildaufzeichnungsverfahren, bei dem
ein Bild durch Aufbringen von Tinte auf einem Aufzeichnungsmedium erzeugt wird,
**dadurch gekennzeichnet, dass**
als Tinte die Tintenzusammensetzung nach einem der Ansprüche 1 bis 6 verwendet wird.

8. Bildaufzeichnungsverfahren nach Anspruch 7, bei dem
die Tinte durch Einwirkung von Wärmeenergie ausgestoßen wird, um die Tinte auf dem Aufzeichnungsmedium aufzubringen.

9. Bildaufzeichnungsverfahren nach Anspruch 7 oder 8, bei dem
das Bild erzeugt wird durch In-Berührung-Bringen der Tintenzusammensetzung mit einer Substanz, die die Stimulierung der Tintenzusammensetzung ausübt, um diese auf dem Aufzeichnungsmedium zu fixieren; und
die die Stimulierung der Tintenzusammensetzung ausübende Substanz ein Vernetzungsmittel enthält, das mit dem Blockpolymer in der Tintenzusammensetzung vernetzt.

10. Bildaufzeichnungsverfahren nach Anspruch 9, bei dem
die Tintenzusammensetzung Mizellen, die aus dem Blockpolymer zusammengesetzt sind, bildet.

11. Bildaufzeichnungsvorrichtung,
die durch Aufbringen von Tinte auf einem Aufzeichnungsmedium ein Bild erzeugt,
wobei die Vorrichtung eine Tinte enthält,
**dadurch gekennzeichnet, dass**
die Tinte die Tintenzusammensetzung nach einem der Ansprüche 1 bis 6 ist.

## Revendications

1. Composition d'encre ayant une capacité de réponse à la stimulation pour la modification de ses propriétés dans des conditions de stimulation, comprenant un polymère séquencé ayant une structure polyvinyléther, un solvant et un pigment ou un colorant,
**caractérisée en ce que**
ledit polymère séquencé ayant une structure polyvinyléther comprend deux ou plus de deux blocs hydrophiles différents ayant une structure oxyalkylène dans au moins une partie de ses chaînes latérales.

2. Composition d'encre suivant la revendication 1, dans laquelle ledit solvant est l'eau ou un solvant aqueux.

3. Composition d'encre suivant la revendication 1 ou 2, dans laquelle ledit polymère est un polymère augmentant la dispersibilité du pigment ou du colorant dans la composition d'encre.

4. Composition d'encre suivant la revendication 1, dans laquelle ladite stimulation est au moins une stimulation choisie entre une variation de température, une irradiation avec des ondes électromagnétiques, une variation de pH de la composition ou une variation de concentration de la composition.

5. Composition d'encre suivant l'une quelconque des revendications 1 à 4, dans laquelle une structure de motif répété d'une structure polyvinyléther dans ledit polymère est représentée par la formule (1) suivante :
-(CH₂-CH(OR¹)) (1)
dans laquelle
R¹ est choisi dans le groupe consistant en un groupe -(CH(R²) -CH(R³)-O)ₗ-R⁴ ou - (CH²)ₘ- (O)ₙ-R¹ ; l et m sont choisis chacun indépendamment parmi des nombres entiers de 1 à 12 ; n est égal à 0 ou 1 ; R² et R³ représentent chacun indépendamment H ou un groupe CH₃ ; R⁴ représente H, un groupe alkyle linéaire, ramifié ou cyclique ayant 1 à 6 atomes de carbone, Ph, Pyr, Ph-Ph, Ph-Pyr, -CHO, -CH₂CHO, -CO-CH=CH₂, -CO-C (CH₃) =CH₂ ou -CH₂COOR⁵, et lorsque R⁴ représente un substituant autre que l'hydrogène l'atome d'hydrogène sur l'atome de carbone du substituant peut être substitué par un groupe alkyle linéaire ou ramifié ayant 1 à 4 atomes de carbone ou avec F, Cl ou Br, et l'atome de carbone dans le noyau aromatique du substituant peut être substitué par un atome d'azote ; et R⁵ représente H ou un groupe alkyle ayant 1 à 5 atomes de carbone.

6. Composition d'encre suivant l'une quelconque des revendications 1 à 5, comprenant en outre un agent tensioactif.

7. Procédé de formation d'image pour former une image en appliquant une encre sur un support d'enregistrement, **caractérisé par** l'utilisation comme encre de la composition d'encre suivant l'une quelconque des revendications 1 à 6.

8. Procédé de formation d'image suivant la revendication 7, dans lequel l'encre est éjectée en appliquant de l'énergie thermique pour l'application de l'encre sur le support d'enregistrement.

9. Procédé de formation d'image suivant la revendication 7 ou 8, dans lequel l'image est formée en mettant en contact ladite composition d'encre et une substance provoquant une stimulation de ladite composition d'encre pour la fixation de ladite composition sur un support d'enregistrement ; et dans lequel ladite substance provoquant une stimulation de ladite composition contient un agent de réticulation qui présente une réticulation avec le polymère séquencé présent dans ladite composition d'encre.

10. Procédé de formation d'image suivant la revendication 9, dans lequel ladite composition d'encre forme des micelles constituées du polymère séquencé.

11. Appareil de formation d'image pour former une image en appliquant une encre sur un support d'enregistrement, ledit appareil contenant une encre, **caractérisé en ce que** l'encre est la composition d'encre suivant l'une quelconque des revendications 1 à 6.
